Europäisches Patentamt

European Patent Office

Office européen des brevets

(11) Publication number: **0 046 239 B1**

(12) **EUROPEAN PATENT SPECIFICATION**

(45) Date of publication of patent specification: **27.05.87**

(51) Int. Cl.⁴: **G 11 B 5/84,** G 11 B 5/62, H 01 F 41/26

(21) Application number: **81106127.4**

(22) Date of filing: **05.08.81**

(54) Magnetic record carrier for vertical recording.

(30) Priority: **18.08.80 DE 3035148**

(43) Date of publication of application: **24.02.82 Bulletin 82/08**

(45) Publication of the grant of the patent: **27.05.87 Bulletin 87/22**

(84) Designated Contracting States: **DE FR GB IT**

(56) References cited:
WO-A-80/00891
DE-A-2 001 044
DE-A-2 309 594
DE-A-2 827 870
DE-A-2 924 013
DE-C- 915 738
DE-C- 934 731
FR-A-2 406 654

IBM TECHNICAL DISCLOSURE BULLETIN, vol. 11, no. 7, December 1968, page 791, Armonk, N.Y. (USA); D.J.LAGOE: "Magnetic transfer coating method".

(73) Proprietor: **IBM DEUTSCHLAND GMBH Pascalstrasse 100 D-7000 Stuttgart 80 (DE)**

(84) **DE**

(73) Proprietor: **International Business Machines Corporation Old Orchard Road Armonk, N.Y. 10504 (US)**

(84) **FR GB IT**

(72) Inventor: **Brunsch, Arwed, Dr. Am Bopserweg 8 D-7000 Stuttgart 1 (DE)**
Inventor: **Ruh, Wolf-Dieter Sommerhofenstrasse 152-1 D-7032 Sindelfingen 1 (DE)**
Inventor: **Trippel, Gerhard, Dr. Steinenbronnerstrasse 15 D-7032 Sindelfingen (DE)**

(74) Representative: **Herzog, F. Joachim, Dipl.-Ing Schönaicher Strasse 220 D-7030 Böblingen (DE)**

## Description

The invention concerns a method for producing a magnetic record carrier on which recording is effected perpendicularly to the recording surface.

From German Offenlegungsschrift 28 27 870 a magnetic record carrier is known, whereby recording or reading, generally speaking the storing of information, is effected perpendicularly to the recording surface. For this purpose, a storage layer is provided, whose easy axis of magnetization and anisotropy, respectively, is arranged perpendicularly to the surface of the record carrier. Underneath this storage layer a soft-magnetic layer, for example, of permalloy, is provided for amplifying the stray field strength to increase the read signal and to eliminate crosstalk to the storage layer on the other substrate side. The storage density obtainable by means of such an arrangement is considerably higher than that of longitudinal recording methods which have been generally used so far and whereby the information to be stored is recorded longitudinally in a direction parallel to the plane of the record carrier in accordance with the direction of magnetization of the storage medium extending in that direction.

Such layer structures, which are known, for example, from the above-mentioned Offenlegungsschrift and which comprise a soft-magnetic permalloy layer on the substrate and the vertical storage layer arranged thereon, are manufactured in such a manner that the layers are vapor deposited in an elaborate vacuum process or are applied by means of another process, such as sputtering. In each case, the apparatus used is extensive, costly and time-consuming. If defects occur in the manufactured product, the value of the rejects is particularly high. This disadvantageously affects the cheap and efficient manufacture of such storage media in great quantities.

An anisotropic magnetic recording material suitable for vertical information storage and on which the magnetic particles are arranged perpendicularly to the substrate is known from German Auslegeschrift 23 09 594. With this known arrangement, the magnetic storage material is arranged in aluminium oxide micropores which are positioned perpendicularly on the record carrier. The record carrier, generally the substrate, consists primarily of aluminium or an aluminium alloy, the surface of which is provided with such pores by anodic oxidation. Subsequently, the pores are filled with magnetic material in an electrochemical process. The pores have a small thickness relative to their length, so that the magnetic material has a shape anisotropy which extends perpendicularly to the plane of the record carrier, so that the direction of magnetization is vertical.

In the case of this known magnetic record carrier, the substrate, i.e., the core of the record carrier, which also determines its mechanical strength, consists of aluminium or an aluminium alloy. Inclusions in the substrate material, which do not consist of aluminium, i.e., generally second-phase inclusions, act as magnetic defects in such a manner that parts are not recorded or are missing afterwards. The carrier material or the substrate determines the mechanical strength, in particular in the case of non-flexible magnetic disks. The aluminium or aluminium alloy used for the substrate must be a commercial aluminium or a commercial alloy, rather than pure aluminium which is very soft. The purity of technical alloys leads to a rough interface between metal and aluminium oxide during the anodization process. As a result, the perpendicularly arranged, quasi rod-shaped magnetic particles have differing lengths and thus differing magnetic properties. This, too, disadvantageously affects the recording and reading process. In addition, it is decisive that this known record carrier does not permit a magnetic two-layer structure.

In the IBM Technical Disclosure Bulletin, Vol. 11 No. 7 December 1968, page 791, there is described a magnetic transfer coating method. A film of magnetic recording material carried on an auxiliary substrate is transferred to an adhesive-coated permanent substrate. The permanent substrate is coated with a thermoplastic adhesive containing an infrared absorptive material. Both substrates are drawn past laminator heat rolls that heat both substrates with their coatings. An additional infrared heater heats the magnetic film and the adhesive layer of the permanent substrate at their interface just prior to lamination. After lamination and a following pair of pressure rollers the auxiliary substrate is removed from the magnetic recording film transferred to the permanent substrate. The structure described in this article does not contain any hint to vertical recording nor to rigid substrates nor to a structure containing a soft-magnetic layer underneath a vertical storage layer. It also does not contain a hint that lamination could be used instead of vapor deposition of magnetic layers.

It is the object of the present invention to provide a method for producing a record carrier far more simply, efficiently and cheaply without the elaborate means described above and without having to tolerate any technical deterioration. This applies primarily to the soft-magnetic underlayer. With regard to a vertically storing record carrier with magnetic material contained in aluminium oxide pores the problem to be solved consists in providing an approach for designing and manufacturing a vertically storing record carrier, whose structure is simple and whose technical behaviour is improved. Thus, for example, the risk of weak and differing read signals, cross-talk or defects in the record carrier, leading to missing bits, is to be considerably reduced or eliminated.

This problem is solved by means of the invention set out in claim 1.

The advantages obtained by means of the invention are essentially such that the elaborate application process, such as application by means of a vacuum process, used to manufacture a soft-magnetic underlayer underneath a perpendicular recording layer can be avoided by the simple application of a foil, which, prior to being applied to the substrate, is intimately linked to a further foil, for example, by rolling. After having been suitably prepared, this further aluminium foil serves to accommodate the perpendicularly storing magnetic particles.

One way of carrying out the invention is described in detail below with reference to drawings which illustrate only one specific embodiment, in which

Fig. 1 is a section through part of a magnetic record carrier;

Fig. 2 is a schematic of an arrangement for rolling a permalloy foil on to a substrate material, such as AlMg5, as the latter is being rolled down, and

Fig. 3 is a schematic of means for rolling an aluminium foil with a permalloy foil to produce a composite foil.

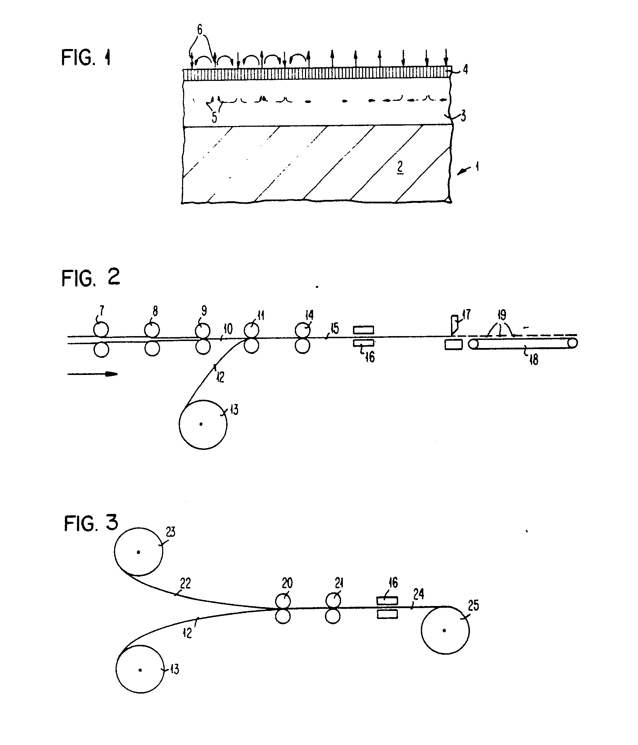

Fig. 1 is a sectional view of part of a magnetic record carrier 1, for example, a magnetic disk, produced by the method shown in Figure 2. This method does not constitute the presently claimed invention. The substrate 2 is provided with a soft-magnetic foil 3 on to which the recording layer 4 with the perpendicular direction of magnetization is arranged perpendicularly to the direction of the plane of the record carrier 1. The arrows 5 show the course of the direction of magnetization in the soft-magnetic layer 3 which extends parallel to the plane of the record carrier 1. Arrows 6 show schematically the course of the stray field outside the record carrier 1. This stray field exiting from the record carrier 1 and in particular from the storage layer 4 is decisive for the direction and strength of the read signal which is detected by a magnetic head, not shown. The recording and writing, respectively, of the signals on the storage layer 4 is effected perpendicularly to the plane of the record carrier 1. The record carrier 1, which is preferably realized in the form of a non-flexible magnetic disk, may also be provided with the soft-magnetic layer 3 and the perpendicularly recording layer 4 on the other side of the substrate 2. However, such an arrangement is not shown in the drawings.

The application of the soft-magnetic foil 3, which is in particular a permalloy foil, to the substrate 2 is effected by rolling on, gluing or hot sealing. For this purpose, rolling on is preferably employed for metallic substrates, for example, in the case of the aluminium alloy AlMg5, which is widely used at present for magnetic disks. The foil may also be applied to the substrate 2 by gluing or, if the substrate 2 consists of a plastic, by hot sealing, i.e., by pressing the foil 3 and the substrate 2 together the influence of heat. If the permalloy foil 3 is glued or hot sealed to the substrate 2, it is preferable for both the foil and the substrate to have the same shape as the record carrier 1, i.e., in the case of a magnetic disk, both should be circular and be applied to each other in an aligned form.

Fig. 2 shows how the soft-magnetic foil is rolled on to the substrate 2. By means of three schematically illustrated roll stands 7, 8 and 9, the raw material of the magnetic disks, which consists of the aluminium alloy AlMg5, is rolled down to form a thinner tape. Having left the roll stand 9, this thinner tape is designated as 10. Before the material reaches the next roll stand 11, a soft-magnetic foil 12, which is taken off a delivery roll 13, is applied to tape 10. By means of the roll stand 11 and the subsequent further roll stand 14, the AlMg5 tape 10 and the foil tape 12 are rolled on to each other. Thus, as a result of the intimate linkage of the rolled tapes 10 and 12, a composite material designated as 15 is obtained after treatment in roll stand 14. This composite material may be fed through a station 16 for subsequent treatment, for example, for stress-relieving the material. In this manner the raw material for producing magnetic disks is obtained, which already comprise the substrate 2 and the soft-magnetic foil 3 (cf. Fig. 1). By means of a punching device 17, this tape material is cut into square and rectangular pieces which are removed by means of a transfer device 18. From the blanks 19 removed by transfer device 18 the so-called rounds, i.e., the circular disk blanks, are punched in an arrangement, not shown.

By means of this process shown schematically in Fig. 2 and during which the soft-magnetic foil 12 is applied in the last step as the raw material for the substrate 2 is being rolled down, a substrate with a soft-magnetic layer serving as an underlayer for the perpendicular recording layer to be applied thereto can be produced in a particularly simple manner. For the perpendicular recording layer 4 different materials are known. Thus, for example, cobalt-chromium alloys or cobalt-gadolinium compounds as well as an alloy of one or several transition metals, such as iron and/or cobalt with one or several elements from the group of the rare earths, such as gadolinium, samarium, terbium or holmium may be used. In most cases, these materials are applied to the underlayer, i.e., in the present case, to the soft-magnetic layer 3, by sputtering or a vacuum process.

It is also known for the perpendicularly storing layer 4 to consist of very small pores, so-called micropores, which are filled with magnetic material. To this end, the micropores have a small thickness compared to their length, so that they can accommodate rod-shaped magnetic particles. It is known for such micropores to be generated from an aluminium layer which by anodic oxidation forms micropores positioned perpendicularly to said layer.

In accordance with an embodiment of the invention shown schematically in Fig. 3, a soft-magnetic permalloy foil 12 is taken off the delivery roll 13 and by means of roll stands 20 and 21 is intimately linked to an aluminium foil 22 taken off a delivery roll 23, thus yielding a composite foil 24 which is wound on to a roll 25. This intimate linkage of the two foils 12 and 22 for forming composite foil 24 is advantageously effected by rolling in roll stands 20 and 21 and subsequent treatment in station 26, if required. It cannot be ruled out, however, that a composite foil may be produced by intimately linking the two foils 12 and 22 in another manner, for example, by adhesion.

This composite foil 24 manufactured from the soft-magnetic and the aluminium material is applied to a substrate 2 as a layer sequence similar to layer sequence 3 and 4 in Fig. 1. If this cannot be done by means of the rolling process explained briefly by means of Fig. 2, application may be accomplished by gluing suitably cut pieces to a substrate 2 or, if the substrate material is not a metal compound, by hot sealing the cut pieces on to a substrate 2 consisting of plastic.

Such a structure with substrate, soft-magnetic permalloy foil as part of a composite foil, together with the aluminium layer on the outside, is subsequently subjected to anodic oxidation, so that perpendicularly positioned aluminium oxide pores are formed on the soft-magnetic layer 3. Anodization continues until the aluminium layer is fully oxidized. The time at which the aluminium layer is fully oxidized, i.e., at which it reaches the interface between soft-magnetic permalloy material and aluminium, may be determined by the change in the current-voltage characteristic in the anodization process. During this anodization process perpendicularly positioned aluminium oxide pores, as previously mentioned, are formed which are thin in comparison to their great length. In an electrochemical process, these pores are subsequently filled with magnetic material which by its very shape in said pores has a definite shape anisotropy extending perpendicularly to the plane of the record carrier 1.

As an aluminium foil 22, which in accordance with the arrangement in Fig. 3 is combined with the soft-magnetic permalloy foil 12 to form a composite foil 24, highly pure aluminium with a minimum aluminium content of 99.999% is preferably used. This highly pure aluminium ensures that defects are prevented during the anodic oxidation process, so that such defects, which may lead to missing bits during recording, are eliminated when the magnetic material is subsequently introduced in the pores.

The soft-magnetic foil, in particular the permalloy foil 3, used in accordance with the invention has a thickness of between 10 and 100 μm, whereby a slightly greater thickness in the range of the value of 100 μm would substantially increase the exiting stray field 6. Such foils are commercially available. As an aluminium foil 22 for producing the composite foil 24, foils with thicknesses of up to 10 μm are also commercially available. If micropores consisting of aluminium oxide are used, the layer thickness of the perpendicular record carrier layer 4 can be determined by a polishing process following the electrochemical filling process during which the magnetic material is introduced. This permits optimum determination of the surface quality required.

**Claims**

1. Method for producing a magnetic record carrier (1) on which recording is effected perpendicularly to the recording surface, said magnetic record carrier comprising underneath a magnetic storage layer (4), a soft-magnetic layer (3), both said layers (3, 4) being provided at least on one side of a rigid substrate (2), the method comprising the following steps

   1. preparing a composite foil (24) out of an aluminium foil (22) and a soft-magnetic foil (12), for example of Permalloy, by intimately linking same;

   2. permanently applying appropriately shaped pieces of said composite foil (22) to said rigid substrate (2) such that the aluminium layer is on the outside;

   3. subjecting the thus produced structure to an anodic oxidation so that perpendicularly positioned aluminium oxide pores are formed on said soft-magnetic layer (3); and

   4. filling the thus provided pores with magnetic material to form said magnetic storage layer (4) for perpendicular recording.

2. Method in accordance with claim 1 wherein said intimate linkage between said soft-magnetic foil (12) and said aluminium foil (22) is performed by a rolling process to prepare said composite foil (24) (Fig. 3).

3. Method in accordance with claim 1 or 2, wherein said composite foil (24) is applied to said substrate (2) by rolling on, gluing or hot sealing.

4. Method in accordance with claim 1, 2 or 3 wherein said aluminium foil (22) used is a highly pure one, having an aluminium content of at least 99.999%.

5. Method in accordance with any one of the preceding claims wherein in the case of a metal alloy, for example AlMg5, is used as material for said rigid substrate (2), said composite foil (24) is rolled on in the last phase of the rolling down process of the raw material (10) (Fig. 2).

**Patentansprüche**

1. Verfahren zur Herstellung eines magnetischen Aufzeichnungsträgers (1) mit senkrecht zur Aufzeichnungsfläche erfolgender Aufzeichnung, der eine weichmagnetische Schicht (3) unterhalb einer magnetischen Speicherschicht (4) umfaßt, wobei beide Schichten (3, 4) mindestens auf einer Seite eines starren Trägers (2) angeordnet sind, gekennzeichnet durch folgende Verfahrensschritte:

   1. Anfertigung einer Verbundfolie (24), die durch innige Verbindung einer Aluminiumfolie (22) und einer weichmagnetischen Folie (12), beispielsweise aus Permalloy, gebildet wird;

   2. festes Ambringen entsprechend geformter Teile der Verbundschicht (22) auf dem starren Träger (2) derart, daß sich die Aluminiumschicht auf der Außenseite befindet;

3. Anodisieren der so erhaltenen Struktur zur Bildung senkrecht angeordneter Poren auf der weichmagnetischen Schicht (3) und

4. Füllen der derart hergestellten Poren mit magnetischem Material zur Bildung der zur Aufzeichnung dienenden magnetischen Speicherschicht (4).

2. Verfahren nach Anspruch 1, dadurch gekennzeichnet, daß die innige Verbindung der weichmagnetischen Folie (12) und der Aluminiumfolie (22) zur Verbundfolie (24) durch einen Walzvorgang erzielt wird (Fig. 3).

3. Verfahren nach Anspruch 1 oder 2, dadurch gekennzeichnet, daß die Verbundfolie (24) durch Aufwalzen, Kleben oder Heißsiegeln auf dem Träger (2) aufgebracht wird.

4. Verfahren nach Anspruch 1, 2 oder 3, dadurch gekennzeichnet, daß die verwendete Aluminiumfolie (22) hochrein ist mit mindestens 99.999 % Aluminiumgehalt.

5. Verfahren nach einem der vorstehenden Ansprüche, dadurch gekennzeichnet, daß bei Verwendung einer Metallegierung, beispielsweise AlMg5, als Material für den starren Träger (2) die Verbundfolie (24) im letzten Stadium des Herunterwalzens des Rohmaterials (10) aufgewalzt wird (Fig. 2).

**Revendications**

1. Procédé pour fabriquer un support d'enregistrement magnétique (1), sur lequel un enregistrement est réalisé perpendiculairement à la surface d'enregistrement, ledit support d'enregistrement magnétique comportant, au-dessous d'une couche d'enregistrement magnétique (4), une couche (3) constituée en un matériau magnétique doux, lesdites deux couches (3, 4) étant disposées sur au moins une face d'un substrat rigide (2), ce procédé comprenant les phases opératoires suivantes consistant à :

1. préparer une feuille composite (24) à partir d'une feuille d'aluminium (22) et d'une feuille (12) constituée en un matériau magnétique doux, par exemple du permalloy, au moyen de l'établissement d'une liaison intime entre ces feuilles;

2. appliquer à demeure des morceaux, conformés de façon appropriée, de ladite feuille composite (22) sur ledit substrat rigide (2) de telle sorte que la couche d'aluminium est située sur la face extrérieure;

3. soumettre la structure ainsi obtenue à une oxydation anodique de manière à former des pores en oxyde d'aluminium, positionnés perpendiculairement, dans ladite couche (3) constituée en un matériau magnétique doux; et

4. remplir les pores ainsi formés, avec un matériau magnétique de manière à former ladite couche d'enregistrement magnétique (4) utilisable pour un enregistrement perpendiculaire.

2. Procédé selon la revendication 1, selon lequel ladite liaison intime entre ladite feuille (12) constituée en un matériau magnétique doux et ladite feuille d'aluminium (22) est établie au moyen d'un processus de stratification servant à préparer ladite feuille composite (24) (figure 3).

3. Procédé selon la revendication 1 ou 2, selon lequel ladite feuille composite (24) est appliquée audit substrat (2) par stratification, collage ou scellement à chaud.

4. Procédé selon la revendication 1, 2 ou 3, selon lequel ladite feuille d'aluminium (22) utilisée est une feuille d'aluminium extrêmement pur, possédant une teneur en aluminium à au moins 99.999 %.

5. Procédé selon l'une quelconque des revendications précédentes, selon lequel, dans le cas où l'on utilise un alliage d'aluminium, par exemple du AlMg5, en tant matériau pour ledit substrat rigide (2), ladite feuille composite (24) est formée par stratification au cours de la dernière phase du processus de laminage de la matière première (10) (figure 2).

FIG. 1

FIG. 2

FIG. 3